# EUROPEAN PATENT SPECIFICATION

(11) **EP 1 436 166 B1**
(45) Date of publication and mention of the grant of the patent: **23.12.2009**
(21) Application number: 02765704.8
(22) Date of filing: 11.10.2002
(51) Int. Cl.: B60P 3/04, B60H 1/00

(54) **TRANSPORT VEHICLE AND METHOD FOR VENTILATING A TRANSPORT VEHICLE**
TRANSPORTFAHRZEUG UND VERFAHREN ZUR BELÜFTUNG EINES TRANSPORTFAHRZEUGES
VEHICULE DE TRANSPORT DESTINE NOTAMMENT AU TRANSPORT DE POULETS, ET PROCEDE DE VENTILATION DU COMPARTIMENT D'UN VEHICULE DE TRANSPORT

(30) Priority: 11.10.2001 NL 1019156
(43) Date of publication of application: 14.07.2004
(73) Proprietor: Mennen, Adrianus H. M., 5756 PP Vlierden (NL)
(72) Inventor: Mennen, Adrianus H. M., 5756 PP Vlierden (NL)
(74) Representative: Verhees, Godefridus Josephus Maria
(86) International application number: PCT/NL2002/000650
(87) International publication number: WO 2003/031224

(56) References cited:
- EP-A- 0 323 196
- WO-A-02/16164
- FR-A- 1 106 051
- US-A- 4 454 837

## Description

### BACKGROUND OF THE INVENTION:

### Field of the invention

The invention relates to a transport vehicle, in particular for transporting chickens, comprising a compartment with, as viewed in the direction of travel, a front wall and a rear wall, as well as a roof, a floor and two side walls, which transport vehicle, furthermore, comprises at least one ventilating fan, situated in or on the front wall, as well as at least one air vent in one of the compartment's walls, for taking in air, the ventilating fan is set up in such a way that it extracts air from the compartment.

The front in this situation is the upstream side with respect to the flow of air during transport. By a ventilating fan situated in or near an opening in the front wall is also meant a ventilating fan situated on the front wall and connected to the space in the compartment by means of an opening in the wall.

### Prior art

Such a transport vehicle has been described in WO 02/16164 which document is published prior to the filing date of the present application but later than the priority date claimed. The transport vehicle described in this prior document has exhausting openingings in the side walls of the compartment for the air extracted from the compartment. The air thus has to be blown in the air stream along the sides of the compartment which requires energy.

### Summary of the invention

An objective of the invention is to provide a transport vehicle of the type defined in claim 1 in which ventilation of the compartment is improved. To this end the ventilating fan is set up in such a way that it exhausts the air to outside the transport vehicle in a direction at least substantially parallel to the direction of travel, and the transport vehicle comprises a cab which, as viewed in the direction of travel, is situated in front of as well as at a distance from the compartment, and the ventilating fan is situated behind the cab. Instead of exhausting air in a direction perpendicular to the direction of travel the air is exhausted in or at least substantially in the direction of travel. It has been found that in front of the compartment there is an area where the air pressure just outside the compartment is lower than it is inside. This underpressure has a suction effect on the air in the compartment. Extracting the air from the compartment at this place with a ventilating fan is supported by this natural suction as a result of which better ventilation is achieved or smaller ventilating fans can be used.

There is an underpressure between the cab and the compartment during transport when using transport vehicles with a cab in front. That is why it is advantageous to place the ventilating fan behind the cab.

An embodiment of the transport vehicle is characterized in that the air vent is situated in the rear wall of the compartment, and that the size of the air vent can be adjusted. This is not necessary if the optimal size for a specific type of vehicle has been determined first. In that case, non-adjustable openings the size of this optimal opening will suffice.

A further embodiment is characterized in that there is a resistance device in or in front of the air vent through which the air flowing into the compartment encounters resistance. Because of this resistance an underpressure is created in the compartment near the air vent assuring that air will flow in through all the air vents and that the situation will be averted in which air will flow in at only one place, that where the least resistance is offered. The resistance device is preferably a sponge made of metal or plastic wire.

Still a further embodiment is characterized in that there are a number of floors in the compartment and in addition to the ventilating fan mentioned, the transport vehicle comprises a number of additional ventilating fans which are distributed vertically in the front wall, and in addition to the air vent mentioned, comprises a number of additional air vents which are distributed vertically in the rear wall. In this embodiment the rear wall is executed preferably as one or more doors and there is a moveable closing device in the compartment at the rear for closing off a part of the rear from the floor upwards when the doors are open. When the transport vehicle is being loaded and the uppermost floor is loaded first, the closing device can be used for the floors lying below. Because of this, the air drawn in flows through the uppermost floor. If the floors lying below were not closed off, all the air drawn in would be drawn in through these empty floors because the air encounters less resistance there. In that case, the uppermost floor where chickens are already situated would not be ventilated or would be insufficiently ventilated. Preferably the closing device comprises a plastic covering which can be rolled up and which extends over the entire width of the compartment.

### Brief description of the drawings

The invention will be elucidated more fully below on the basis of drawings in which an embodiment of the transport vehicle according to the invention is shown. In these drawings:
Figure 1 is a side view of an embodiment of the transport vehicle according to the invention in which the compartment is shown in cross-section;
Figure 2 is a view from above of a front part of the transport vehicle's compartment;
Figure 3 is a front view of the compartment; and
Figure 4 is a rear view of the compartment.

### Detailed description of the drawings

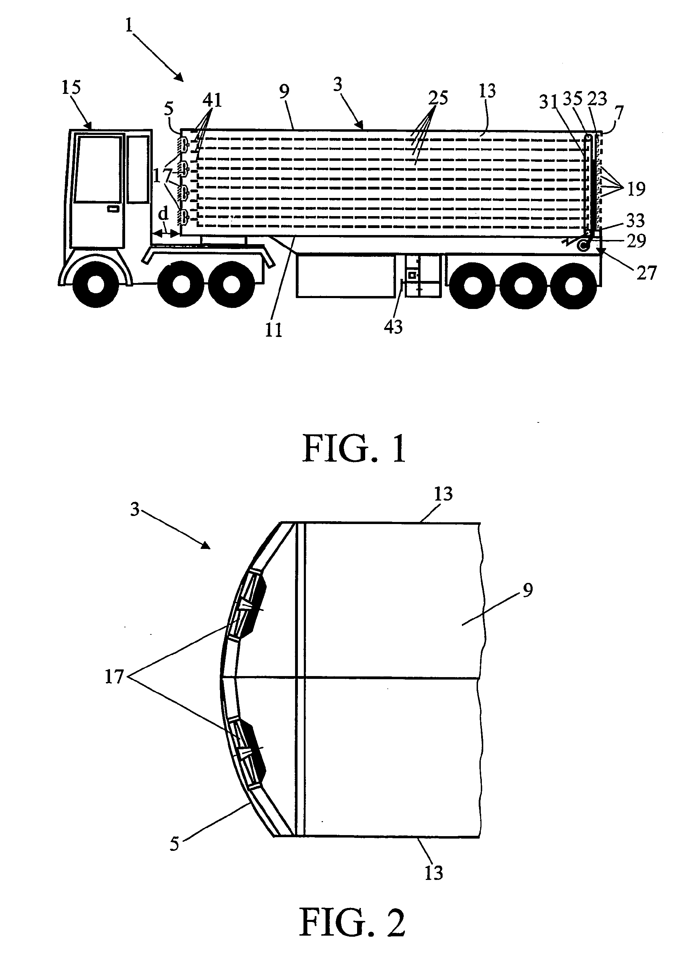

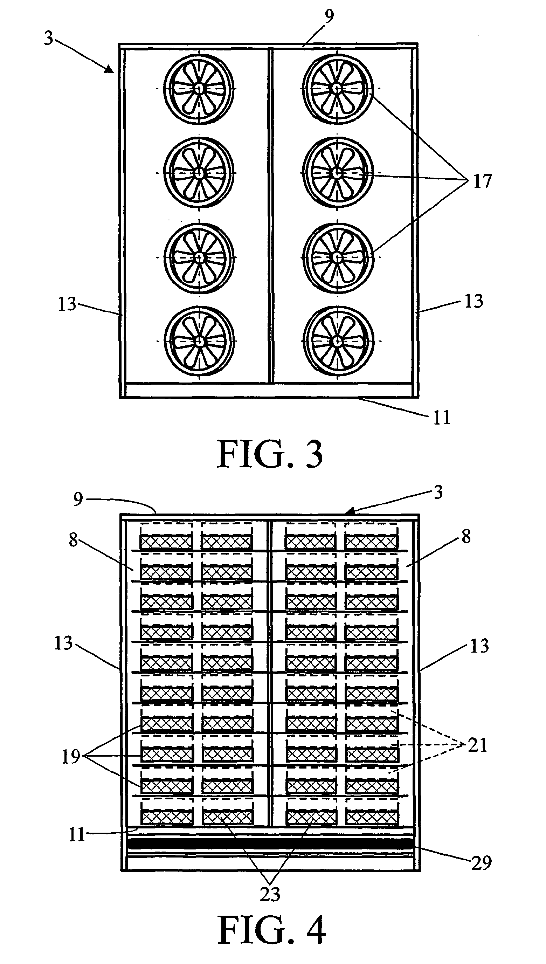

In Figure 1 an embodiment of the transport vehicle 1 according to the invention is shown in a side view. The transport vehicle is suitable for transporting chickens and has a compartment 3 with a front wall 5, a rear wall 7, a roof 9, a floor 11 and two side walls 13. For the sake of clarity, the compartment is shown here in cross-section. The transport vehicle 1, furthermore, has a cab 15 situated in front of and at a distance d from the compartment 3. There are eight ventilating fans 17 in the front wall 5 of the compartment 3, which are situated behind the cab 15 in openings in the front wall 5. The ventilating fans are set up in such a way that they extract air from the compartment 3 and blow it outside. In Figures 2 and 3, the position of the ventilating fans 17 in the front wall 5 can be seen clearly.

The rear wall 7 of the compartment 3 is made up of two doors 8, see Figures 1 and 4. In the rear wall 7 there are a number of air vents 19 for letting fresh air in. The size of the air vents 19 can be adjusted by means of sliding devices 21 (see Figure 4), which can be slid in front of the air vents 19. There is a sponge 23 made of plastic wire in front of the air vents 19 on the inner side of the rear wall 7. This sponge 23 is a resistance device
through which the air flowing into the compartment encounters resistance. The roof 9, the floor 11 and the side walls 13 are closed.

There are a number of floors 25 in the compartment, see Figure 1. In the compartment 3 at the rear there is a moveable closing device 27 for closing off a part of the rear from the floor 11 upwards. This closing device 27 comprises a plastic covering 29 that can be rolled up and which extends over the entire width of the compartment 3. One end of the plastic covering 29 is attached to cables 31 near the side walls 13 of the compartment 3, which are led round two wheels 33 and 35 at the top and bottom of the compartment 3. One of the wheels 33 can be driven in order to raise or lower the plastic covering 29.

For regulating the ventilating fans 17, there are temperature sensors 41 on each floor 25 of the compartment 3 as well as a sensor for the outside temperature 43.

Although in the above the invention is explained on the basis of the drawings, it should be noted that the invention is in no way limited to the embodiment shown in the drawings. The invention also extends to all embodiments deviating from the embodiment shown in the drawings within the context defined by the claims.

## Claims

1. Transport vehicle (1), in particular for transporting chickens, comprising a compartment (3) with, as viewed in the direction of travel, a front wall (5) and a rear wall (7), as well as a roof (9), a floor (11) and two side walls (13), which transport vehicle (1) furthermore comprises a cab (15) which, as viewed in the direction of travel, is situated in front of as well as at a distance (d) from the compartment (3), and at least one ventilating fan (17), situated in or on the front wall (5) behind the cab (15), as well as at least one air vent (19) in one of the compartment's walls, for taking in air, the ventilating fan (17) being set up in such a way that it extracts air from the compartment (3) and that it exhausts the air to outside the transport vehicle in a direction at least substantially parallel to the direction of travel.

2. Transport vehicle (1) according to claim 1, **characterized in that** the air vent (19) is situated in the rear wall (7) of the compartment (3), and that the size of the air vent (19) can be adjusted.

3. Transport vehicle (1) according to claim 1 or 2, **characterized in that** there is a resistance device situated in or in front of the air vent (19) through which the air flowing into the compartment (3) encounters resistance.

4. Transport vehicle (1) according to claim 3, **characterized in that** the resistance device is a sponge (23) made of metal or plastic wire.

5. Transport vehicle (1) according to one of the preceding claims, **characterized in that** there are a number of floors (25) in the compartment (3) and the transport vehicle (1) comprises in addition to the ventilating fan (17) mentioned, a number of additional ventilating fans (17) which are distributed vertically in the front wall (5) and comprises in addition to the air vent (19) mentioned, a number of additional air vents (19) which are distributed vertically in the rear wall (7).

6. Transport vehicle (1) according to claim 5, **characterized in that** the rear wall (7) is executed as one or more doors (8) and that there is a movable closing device (27) in the compartment (3) at the rear for closing off a part of the rear from the floor (11) upwards when the doors (8) are open.

7. Transport vehicle (1) according to claim 6, **characterized in that** the closing device (27) comprises a plastic covering (29) that can be rolled up, which extends over the entire width of the compartment (3).

## Patentansprüche

1. Transportfahrzeug (1), insbesondere für die Beförderung von Hühnern, bestehend aus einem Abteil (3), das sich, in Fahrtrichtung gesehen, aus einer Stirnwand (5) und einer Rückwand (7) sowie einem Dach (9), einem Fußboden (11) und zwei Seitenwänden (13) zusammensetzt, wobei das Transportfahrzeug (1) ferner ein Fahrerhaus (15), das sich, in Fahrtrichtung gesehen, sowohl vor als auch im Abstand (d) zu dem Abteil (3) befindet, und mindestens ein Gebläse (17) umfasst, das in oder an der Stirnwand hinter dem Fahrerhaus (15) angeordnet ist, sowie mindestens eine Belüftungsöffnung (19) in einer der Wände des Abteils (3) für die Zufuhr von Luft, und wobei das Gebläse (17) so angeordnet ist, dass damit Luft aus dem Abteil (3) abgesaugt und diese damit in einer Richtung ins Freie geblasen wird, die der Fahrtrichtung zumindest hauptsächlich parallel ist.

2. Transportfahrzeug (1) nach Anspruch 1, **dadurch gekennzeichnet, dass** die Belüftungsöffnung (19) an oder nahe der Rückseite des Abteils (3) angeordnet ist, so dass Luft zuströmen kann.

3. Transportfahrzeug (1) nach einem der Ansprüche 1 oder 2, **dadurch gekennzeichnet, dass** in oder vor der Belüftungsöffnung (19) Widerstandsmittel vorhanden sind, von denen die in das Abteil (3) strömende Luft gebremst wird.

4. Transportfahrzeug (1) nach Anspruch 3, **dadurch gekennzeichnet, dass** die Widerstandsmittel aus einem Schwamm (23) aus Metall oder Kunststofffäden bestehen.

5. Transportfahrzeug (1) nach einem der vorangegangenen Ansprüche, **dadurch gekennzeichnet, dass** in dem Abteil (3) mehrere Etagen (25) vorhanden sind und das Transportfahrzeug (1) neben dem erwähnten Gebläse (17) mehrere zusätzliche Gebläse (17) umfasst, die übereinander verteilt in der Stirnwand (5) angebracht sind, und neben der erwähnten Belüftungsöffnung (19) mehrere weitere Belüftungsöffnungen (19) umfasst, die sich übereinander verteilt in der Rückwand (7) befinden

6. Transportfahrzeug (1) nach Anspruch 5, **dadurch gekennzeichnet, dass** die Rückwand (7) in Form einer oder mehrerer Türen (8) ausgeführt ist und an der Rückseite des Abteils (3) verschiebbare Schließvorrichtungen (27) vorhanden sind, mit denen ein Teil der Rückseite bei geöffneten Türen (8) von dem Fußboden (11) aus nach oben hin geschlossen werden kann.

7. Transportfahrzeug (1) nach Anspruch 6, **dadurch gekennzeichnet, dass** die Schließvorrichtungen (27) eine aufrollbare Kunststofffolie (29) umfassen, die über die gesamte Breite des Abteils (3) reicht.

## Revendications

1. Véhicule de transport (1), en particulier pour le transport de poules, comprenant un compartiment (3) avec, vue dans le sens de la circulation, une paroi avant (5) et une paroi arrière (7), ainsi qu'un toit (9), un sol (11) et deux parois latérales (13), lequel véhicule de transport (1) comprend en outre une cabine (15) qui, vue dans le sens de la circulation, se trouve devant et à distance (d) du compartiment (3), et comprend au moins un ventilateur (17) se trouvant dans ou sur la paroi avant, derrière la cabine (15), ainsi qu'au moins un orifice d'aération (19) dans l'une des parois du compartiment (3), pour laisser entrer l'air, lequel ventilateur (17) est monté de telle manière qu'il aspire l'air du compartiment (3) et qu'il souffle l'air à l'extérieur dans une direction au moins en majeure partie parallèle au sens de circulation.

2. Véhicule de transport (1) selon la revendication 1, **caractérisé en ce que** l'orifice d'aération (19) se trouve sur ou près du côté arrière du compartiment (3), pour laisser entrer l'air à l'intérieur.

3. Véhicule de transport (1) selon la revendication 1 ou 2, **caractérisé en ce que** dans ou devant l'orifice d'aération (19) se trouvent des moyens de résistance qui font que l'air affluant dans le compartiment (3) rencontre une résistance.

4. Véhicule de transport (1) selon la revendication 3, **caractérisé en ce que** les moyens de résistance sont une éponge (23) en métal ou en fils synthétiques.

5. Véhicule de transport (1) selon une des revendications précédentes, **caractérisé en ce que** dans le compartiment (3) se trouvent un certain nombre d'étages (25) et **en ce que** le véhicule de transport (1) comprend, en plus du ventilateur (17) mentionné, un certain nombre d'autres ventilateurs (17) se trouvant répartis en hauteur le long de la paroi avant (5), et comprend, en plus de l'orifice d'aération (19) mentionné, un certain nombre d'autres orifices d'aération (19) se trouvant répartis en hauteur le long de la paroi arrière (7).

6. Véhicule de transport (1) selon la revendication 5, **caractérisé en ce que** la paroi arrière (7) est faite d'une ou plusieurs portes (8) et **en ce que** sur la paroi arrière dans le compartiment (3) se trouvent des moyens de verrouillage mobiles (27) pour, dans le cas où les portes (8) sont ouvertes, verrouiller depuis le sol (11) une partie du côté arrière.

7. Véhicule de transport (1) selon la revendication 6, **caractérisé en ce que** les moyens de verrouillage (27) comprennent une feuille (29) pouvant être enroulée, et s'étendant tout au long de la largeur du compartiment (3).
